# FASCICULE DE BREVET EUROPEEN

(11) **EP 0 405 653 B1**
(45) Date de publication et mention de la délivrance du brevet: **12.04.1995**
(21) Numéro de dépôt: 90201597.3
(22) Date de dépôt: 19.06.1990
(51) Int. Cl.: H02M 7/5387, H02M 5/458, H02M 7/515, H02M 5/45

(54) **Convertisseur de puissance d'énergie électrique dont la commutation est assistée moyennant un contrôle actif de la tension d'alimentation du circuit inverseur de tension**
Elektrische Energie-Leistungskonverter, deren Kommutierung durch eine aktive Steuerung der Versorgungsspannung der Spannungsumpolschaltung unterstützt wird
Electric energy power converter of which commutation is aided by an active control of the supplying voltage of the voltage inverter circuit

(30) Priorité: 27.06.1989 IT 6751989
(43) Date de publication de la demande: 02.01.1991
(73) Titulaire: Fratta, Antonino, Dr.Ing., I-10144 Torino (IT)
(72) Inventeur: Fratta, Antonino, Dr.Ing., I-10144 Torino (IT)
(74) Mandataire: Patrito, Pier Franco, Dr. Ing.

(56) Documents cités:
- EP-A- 0 289 373
- DE-A- 2 937 078
- DE-A- 3 347 108
- US-A- 4 730 242

## Description

La présente invention a pour objet un convertisseur de puissance d'énergie électrique, comprenant une source de tension électrique unidirectionnelle et un circuit inverseur de tension disposé pour convertir ladite tension électrique unidirectionnelle en une tension électrique alternative, éventuellement polyphasée, destinée à alimenter une charge inductive, telle qu'un moteur électrique.

Dans leur utilisation industrielle, les convertisseur de puissance d'énergie électrique sont employés surtout pour alimenter des charges inductives, telles que les moteurs électriques. Actuellement est d'intérêt prééminent l'alimentation des moteurs électriques par du courant alternatif. Prenant en considération les circuits alimentés en tension, la génération des tensions alternatives destinées à alimenter les moteurs électriques est atteinte par la modulation et inversion d'une tension d'alimentation continue (ou unidirectionnelle, c'est à dire ayant une valeur moyenne non-nulle et toujours le même signe), laquelle à son tour est habituellement obtenue par la conversion d'une tension alternative.

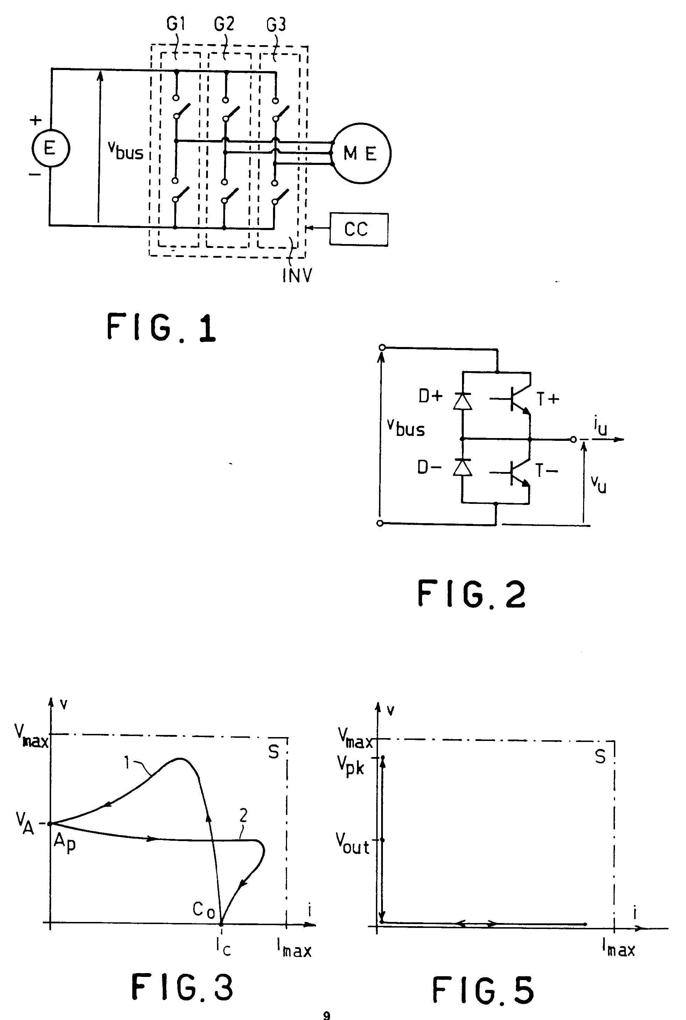

La figure 1 des dessins annexés montre le schéma de principe pour la génération de tensions alternatives triphasées variables appliquées à une charge inductive, telle qu'un moteur électrique ME, en partant d'une source E de tension unidirectionnelle v_{bus}. L'inverseur INV est composé par un certain nombre d'ainsi-dites "jambes" (legs), égal au nombre des phases à générer, donc trois jambes G1, G2, G3 pour un inverseur triphasé. Chaque jambe de l'inverseur est réalisée en employant des valves constituées par des semi-conducteurs qui accomplissent la fonction idéale d'un interrupteur bidirectionnel, malgré que les composants sont en soi unidirectionnels, comme les diodes et les transistors, et elle est commandée par un circuit de contrôle CC qui impose les commutations des transistors (commutation forcée).

La figure 2 montre un mode de réalisation typique d'une jambe d'inverseur par l'emploi de deux transistors T+, T- et de deux diodes de récirculation D+, D-. En négligeant les chutes de tension sur les semi-conducteurs, la tension vᵤ appliquée à la charge peut avoir en chaque instant seulement deux valeurs, à savoir 0 ou v_{bus}, quel que soit le signe du courant iᵤ qui passe dans la charge, que nous allons considérer positif lors qu'il est dirigé suivant la flèche indiquée dans la figure 2. Si le courant iᵤ est positif, T+ doit être en conduction afin d'obtenir vᵤ = v_{bus}, cas contraire on a vᵤ = 0 en vue de la conduction à travers la diode de récirculation D-. Partant, en contrôlant d'une façon adéquate le transistor T+, la valeur moyenne de la tension de sortie vᵤ peut être réglée arbitrairement entre 0 et v_{bus} , en modulant les périodes de permanence sur les deux valeurs instantanées 0 et v_{bus}, avec une fréquence de commutation suffisamment élevée pour limiter les ondulations de courant produites par la forme d'onde à deux valeurs de la tension vᵤ.

Les problèmes technologiques qui se posent dans la réalisation d'un tel circuit à commutation forcée sont dûs à la haute fréquence de commutation (typiquement plus que 1 kHz), parce qu'à chaque commutation de la tension de sortie correspond une energie plus élevée à dissiper et une sollicitation électrique plus considérable des semi-conducteurs. L'énergie perdue par les commutations dans une période complète, multipliée par la fréquence de commutation, donne une valeur moyenne de puissance perdue, qui impose une limite à la fréquence maximum de commutation qu'on peut adopter; bien souvent la fréquence de commutation est choisie par compromis, en partageant les dissipations par conduction et par commutation.

De plus, la sollicitation électrique qui se vérifie pendant la commutation impose une sous-utilisation des composants, dans le but d'obtenir une fiabilité suffisante du circuit. La figure 3 montre un lieu typique v-i (diagramme tension-courant) pour un transistor employé dans un circuit à commutation forcée. L'aire S de fonctionnement en des conditions de sûreté est déterminée idéalement par la tension maximum Vₘₐₓ ainsi que par le courant maximum Iₘₐₓ que le transistor peut supporter; Ap indique la condition d'ouverture et Co la condition de conduction du transistor; la ligne 1 est le diagramme des conditions de fonctionnement du transistor pendant une transition de la conduction à l'ouverture, et la ligne 2 est le diagramme des conditions de fonctionnement du transistor pendant une transition de l'ouverture à la conduction. On peut remarquer que, afin que les conditions instantanées de fonctionnement demeurent toujours comprises dans l'aire S de fonctionnement en des conditions de sûreté, la tension maximum V_{A} qu'on peut appliquer au transistor en ouverture est bien plus réduite de Vₘₐₓ, et le courant maximum I_{c} qui peut parcourir le transistor en conduction est considérablement plus réduite de Iₘₐₓ.

En plus de ce qui précède, dans le cas d'un court circuit sur la charge il est bien facile que les limites de courant des transistors puissent être surmontées, et des systèmes sophistiqués de diagnostique et d'intervention en temps réel sont nécessaires pour éviter que cela se vérifie.

En tous cas, la co-existence de ces trois facteurs impose une sous-utilisation des semi-conducteurs, à moins qu'on accepte l'alternative d'une criticité dangereuse du circuit par rapport aux conditions de panne et/ou de surcharge transitoire.

On connait des solutions de circuit qui aident les semi-conducteurs pendant les commutations, mais ces solutions demandent des dipôles réactifs, avec les coûts et les encombrements relatifs, ainsi que des complications dans les algorithmes de modulation, mais en tous cas ces solutions ne résolvent pas qualitativement le problème, c'est à dire qu'elles n'autorisent pas une utilisation plus efficace des semi-conducteurs.

De plus on doit considérer que dans les circuits à commutation forcée on ne peut pas employer des thyristors, qui sont plus robustes que les transistors par rapport au fonctionnement dans les états de conduction et d'ouverture, mais qui ne peuvent commuter de la conduction à l'ouverture qu'en l'absence de tout courant qui les traverse.

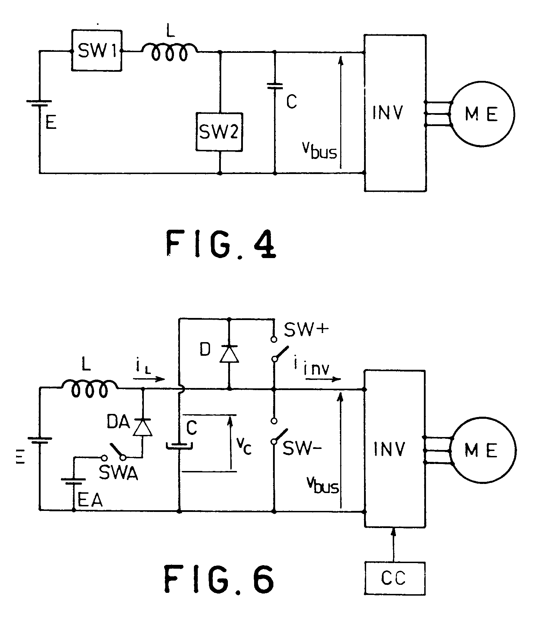

Un type de circuit inverseur bien différent de celui à commutation forcée indiqué jusqu'ici est fourni par la technique à "bus résonant", suivant laquelle la tension d'alimentation v_{bus} appliquée à l'inverseur est une oscillation de tension (unidirectionnelle pour les applications de puissance) à haute fréquence, obtenue moyennant un résonateur L-C de puissance prévalante. La figure 4 montre le schéma de principe d'un convertisseur de puissance à bus résonant alimenté par une source de tension continue E, avec un circuit résonant L-C en série et une tension moyenne non nulle. Dans ce cas les jambes de l'inverseur INV n'ont pas des problèmes de commutation parce qu'à chaque période d'oscillation la tension v_{bus} passe par zéro; en choisissant ces intervalles de temps pour effectuer les commutations on n'a pas sur les semi-conducteurs des sollicitations considérables. Dans ce type de circuit, seulement l'emploi direct des thyristors à extinction contrôlée (GTO) est admis, tandis qu'on ne peut pas utiliser les thyristors communs, sinon au prix de l'addition de circuits ultérieurs.

Le seul problème posé par les valves constituant un inverseur à bus résonant a trait au sous-dimensionnement en tension, parce qu'en ligne de principe la tension de crête qu'elles doivent soutenir est plus grande ou égale à deux fois la tension moyenne d'alimentation qui est utile pour engendrer de la puissance. Cela est éclairci par la figure 5, laquelle montre (d'une façon similaire à la figure 3) un lieu typique v-i pour une valve de puissance employée dans un circuit inverseur à bus résonant. On remarque que la tension de crête Vₚₖ est double de la tension moyenne Vₒᵤₜ, utile pour la génération de puissance. Aussi dans ce cas, donc, on rencontre une considérable sous-utilisation des semi-conducteurs.

Toutefois, les problèmes caractéristiques et plus lourds d'un inverseur à bus résonant sont posés par le dimensionnement du résonateur de puissance L-C et par les techniques d'excitation et de réglage y afférentes, lesquelles sont réalisées moyennant des circuits spéciaux de puissance, schématisés dans la figure 4 par les blocs SW1 et SW2. Des améliorations à la condition de sous-utilisation des semi-conducteurs peuvent être obtenues seulement par des complications ultérieures des circuits des blocs SW1 et SW2.

Par le document DE-A-2.337.078 est connu un circuit inverseur constitué par des thyristors, dans lequel, pour effectuer la commutation on a prévu une capacité disposée en série avec un groupe parallèle d'un diode et d'un composant commandé, pour annuler momentanément la tension positive d'alimentation pendant les intervalles de commutation, et un groupe comprenant un composant commande disposé en série avec une source de tension négative, pour remplacer ladite tension positive d'alimentattion, pendant lesdits intervalles de commutation, par une tension négative.

Dans la situation indiquée ci-dessus de la technique précédente, le but de la présente invention est de perfectionner les convertisseurs de puissance d'énergie électrique, spécialement pour l'alimentation des moteurs électriques, de sorte à autoriser l'obtention d'un ou plusieurs des avantages suivants: obtenir l'exploitation maximum des semi-conducteurs constituant le circuit inverseur; obtenir la plus grande fiabilité et protégeabilité du système; éliminer ou réduire la nécessité de circuits de pilotage et de techniques de protection sophistiqués pour la protection du circuit dans les conditions de panne.

Ce but est atteint, suivant l'invention, par un convertisseur de puissance d'énergie électrique comme défini dans la revendication 1.

En particulier, ledit système de composants comprend un condensateur connecté, à travers une diode, en dérivation à la source de tension unidirectionnelle, un premier élément interrupteur contrôlé inséré en dérivation à ladite diode, et un second élément interrupteur contrôlé inséré en un circuit dérivé à l'entrée du circuit inverseur.

Ces caractéristiques et d'autres et les avantages de l'objet de l′ invention ressortiront plus clairement de la suivante description de certains modes de réalisation, représentés schématiquement, avec des représentations destinées à éclaircir l'état de la technique précédante, dans les dessins annexés, dans lesquels:
Fig. 1 est le schéma de principe (déjà discuté) d'un circuit pour la génération de tensions alternatives triphasées variables appliquées à une charge inductive;
Fig. 2 montre un mode de réalisation typique (déjà discuté) d'une jambe de circuit inverseur utilisant des transistors et des diodes de récirculation;
Fig. 3 montre un lieu v-i typique (déjà discuté) pour un transistor inséré en un circuit inverseur à commutation forcée;
Fig. 4 montre le schéma de principe (déjà discuté) d'un convertisseur de puissance à bus résonant;
Fig. 5 montre un lieu v-i typique (déjà discuté) pour une valve de puissance insérée dans un circuit inverseur à bus résonant;
Fig. 6 montre le schéma de base d'un circuit inverseur de puissance suivant la présente invention;
Fig. 7 montre le schéma de base d'un convertisseur de puissance de courant triphasé à courant triphasé, suivant la technique connue; et
Fig. 8 montre comme le schéma suivant la figure 7 doit être modifié pour y introduir l'application de la présente invention.

Dans la figure 6 on a schématisé un circuit convertisseur de puissance suivant l'invention, dont le circuit inverseur INV (contrôlant un moteur électrique ME) est alimenté par une source de tension continue E; le circuit d'alimentation comprend une inductance L. Ce circuit sera décrit d'abord en négligeant les composants EA, DA et SWA, qui seront discutés plus avant. Entre la source de tension d'alimentation et l'inverseur est inséré un système de composants comprenant un condensateur C connecté en dérivation à la source de tension d'alimentation E à travers une diode D, un premier élément interrupteur contrôlé SW+ inséré en dérivation à ladite diode D, et un second élément interrupteur contrôlé SW- inséré en dérivation à l'entrée du circuit inverseur INV. Ce système de composants a la fonction de contrôler de façon active la tension v_{bus} à l'entrée du circuit inverseur INV entre deux valeurs 0 et v_{c}, tandis que la valeur moyenne de cette tension demeure égale à la tension d'alimentation E.

La fonction du condensateur C est, d'un côté, celle d'absorber (à travers la diode D) l'excès de la tension d'alimentation par rapport à la tension de charge v_{c} du condensateur. Cela comporte que, en contrôlant les circuits de sorte à maintenir dans une limite maximum préétablie la tension de charge du condensateur C, on évite sûrement l'application de toute tension sensiblement supérieur au circuit inverseur. La fonction du condensateur C est aussi, d'autre part, celle de pourvoir temporairement à des demandes de courant iᵢₙᵥ absorbé par le circuit inverseur, supérieures au courant i_{L} livré par la source d'alimentation. Cela a lieu par l'action de l'interrupteur contrôlé SW+ dont la fonction consiste en ce que, lors qu'il est en conduction, il permet à une partie de l'énergie électrique accumulée dans le condensateur C de s'écouler vers le circuit inverseur INV.

La fonction de l'élément interrupteur contrôlé SW- est celle d'établir un court circuit momentané aux bornes de l'entrée du circuit inverseur INV, ainsi annulant la tension v_{bus} qui lui est appliquée.

Partant, pour obtenir v_{bus} = 0 il suffit d'ouvrir SW+, ou bien il est aussi nécessaire de fermer SW-, suivant le signe positif ou négatif du courant differentiel (i_{L}-iᵢₙᵥ). Lors que la condition v_{bus} = 0 est vérifiée, les valves de l'inverseur peuvent être commutées sans sollicitations. De plus, le temps dans lequel la condition v_{bus} = 0 est maintenue peut être administré de façon active en vue d'une optimisation ultérieure de la commutation. En tous cas ce temps est toujours bien court, et pendant le temps restant la tension appliquée à l'entrée du circuit inverseur est donnée par: v_{bus} = v_{c}, une condition qu'on obtient en ouvrant SW-, et éventuellement aussi en fermant SW+, suivant la valeur instantanée de (i_{L}-iᵢₙᵥ). Par conséquent E est de peu inférieur de v_{c}, et cela est important parce que v_{c} représente la sollicitation maximum de tension sur les valves de l'inverseur, et la tension E qui produit la puissance n'est pas notablement plus réduite d'elle. L'utilisation des semi-conducteurs de l'inverseur est donc pratiquement la plus grande possible.

Les problèmes de dimensionnement sont tous déplacés sur les éléments interrupteurs contrôlés SW+ et SW-, d'une façon qui dépend du dimensionnement quantitatif de L et de C.

En ce qui concerne SW-, dans les conditions opératives il doit soutenir les commutations si le courant différentiel (i_{L}-iᵢₙᵥ) a un signe positif; du fait que la conduction a une durée courte (par exemple de 5 à 10 microsecondes), la puissance dissipée par conduction est pratiquement négligeable. Le dimensionnement de L a influence surtout sur la commutation d'ouverture de SW-; si L a une valeur réduite, pendant la période de conduction l'augmentation du courant peut être élevée, ainsi augmentant la dissipation pendant la commutation d'ouverture par rapport au minimum nécessaire pour le fonctionnement (qui serait atteint lors que L tend à l'infini).

En ce qui concerne SW+, dans les conditions opératives il doit soutenir les commutations si le courant differentiel (i_{L}-iᵢₙᵥ) a un signe négatif; la conduction pourrait être considérable parce que SW+ est en conduction pour des temps étendus (presque toujours); mais en pratique, du fait que le courant differentiel (i_{L}-iᵢₙᵥ) doit être nul en moyenne, le temps réel de conduction de SW+ est bien plus réduit; pendant le temps restant le courant (i_{L}-iᵢₙᵥ) a un signe positif et il affecte alors la conduction de la diode D. On peut démontrer que plus grand est le courant différentiel (i_{L} -iᵢₙᵥ) par rapport à l'une de ses composantes, plus réduit est le temps de conduction de SW+.

Comme on le comprend de ce qui précède, et surtout en considérant la figure 6, les éléments interrupteurs SW+ et SW- doivent être contrôlés d'une façon précise pour forcer les commutations. Partant, pour ce contrôle sont nécessaires des circuits de pilotage sophistiqués, et aussi des circuits d'aide à la commutation peuvent être utiles, d'une façon entièrement similaire de ce qui est connu pour le pilotage des valves du circuit inverseur. Au contraire, une telle nécessité ne se présente pas pour les valves de l'inverseur, qui sont complètement libres des problèmes de commutation. Du fait que le nombre de valves de l'inverseur est plus grand que le nombre (deux seulement) des éléments interrupteurs contrôlés suivant l'invention, il est possible d'obtenir une structure de conversion complète plus économique et moins dissipative, malgré la complication apparente des circuits, introduite par la présence d'une structure de contrôle actif de l'alimentation en courant continu.

On va maintenant développer des considérations sur la protegeabilité d'un convertisseur suivant l'invention. La condition de panne à considérer principalement est le court circuit sur la charge. Dans ce cas un circuit correspondant au schéma suivant la figure 6 peut comporter des problèmes seulement dans les conditions de conduction de SW+. Il est donc nécessaire de munir SW+ d'une protection en temps réel contre le surcourant, c'est à dire d'un circuit de pilotage sophistiqué et compliqué, substantiellement suivant la technique connue. Après que SW+ a été ouvert on peut fermer SW- et ensuite ouvrir les valves de l'inverseur pour annuler les effets du court circuit sur la charge. Ensuite, par la réouverture de SW-, le transitoire de surcourant de court circuit provoqué en L s'épuise.

En cas de panne (court circuit) d'une valve de l'inverseur, le procès est du tout similaire de celui exposé ci-dessus concernant le court circuit sur la charge. En cas de panne (court circuit) des deux valves d'une même jambe de l'inverseur, la protection contre le surcourant en L peut être atteinte moyennant des coupe-circuits fusibles et/ou des interrupteurs magnéto-thermiques insérés en série à L, et le dimensionnement de ces appareils de protection est favorisé par la présence de L qui limite la valeur de la dérivée du courant de panne.

Le schéma suivant la figure 6, qui est le schéma de base d'un circuit inverseur de puissance suivant l'invention, permet, d'une façon simple, de réduire considérablement les pertes de commutation et de rendre plus facile la protection du convertisseur.

On atteint cela par l'introduction d'une source EA d'une tension réduite par rapport à la tension de travail; la source EA forme un groupe avec une diode DA, et elle peut être insérée en parallèle à l'interrupteur contrôlé SW- moyennant le contrôle d'un interrupteur SWA. Le bloc constitué par les composants EA, DA et SWA est mis en activité en fermant SWA avant la fermeture de SW+, chaque fois la tension V_{bus}, après avoir été annulée par SW-, doit être restaurée à sa valeur maximum. Se déroulent alors les suivantes trois phases:

Première phase: à la fermeture de SWA, l'application d'une tension positive réduite (par exemple de l'ordre de 10 volts) provoque la restauration de la polarisation directe de SW- ainsi que de toutes les valves faisant partie des jambes actives de l'inverseur INV, par une consommation d'énergie moindre du fait de la valeur réduite de la tension EA.

Deuxième phase: après obtention de ladite polarisation directe jusqu'à la tension EA, la situation peut être éventuellement contrôlée par des circuits appropriés de signalisation, pour autoriser la poursuite du fonctionnement seulement si la polarisation s'est effectivement établie, tandis que le fonctionnement peut être bloqué en cas contraire.

Troisième phase: on peut enfin fermer a nouveau SW+ et procéder à l'application de la pleine tension V_{c} et de la pleine puissance, sans que cette pleine tension doive être utilisée pour l'ainsi dit "recovery", à savoir pour neutraliser les charges accumulées dans les composants qui se trouvaient auparavant à une tension très réduite.

De cette façon on réduit en une grande mesure les pertes de commutation, et dans le même temps on étend aussi au composant SW- la protection contre les surcharges, en autorisant une simplification des circuits destinés à sa protection. Bien entendu, sont maintenant nécessaires des circuits pour la protection de SWA, mais ces circuits se réalisent facilement et économiquement du fait de la valeur réduite de la tension EA, et donc du peu d'énergie impliqué. Ces circuits de protection, à la limite, pourraient être simplement de type dissipatif.

On doit remarquer d'or et déjà que le groupe des composants DA, EA et SWA peut être adopté aussi en un quelconque des schémas qui seront décrits plus avant, pour obtenir les mêmes avantages décrits.

Jusqu'ici on a supposé que le convertisseur était alimenté par un courant unidirectionnel, mais, dans l'électronique industrielle, est d'intêrét prééminent l'alimentation triphasée de moteurs électriques par une puissance obtenue à partir d'un réseau triphasé, en général à une fréquence de 50 à 60 Hz. L'invention est particulièrement adaptée pour cette application, même si et surtout lors qu'on exige la récupération sur le réseau de l'énergie mécanique.

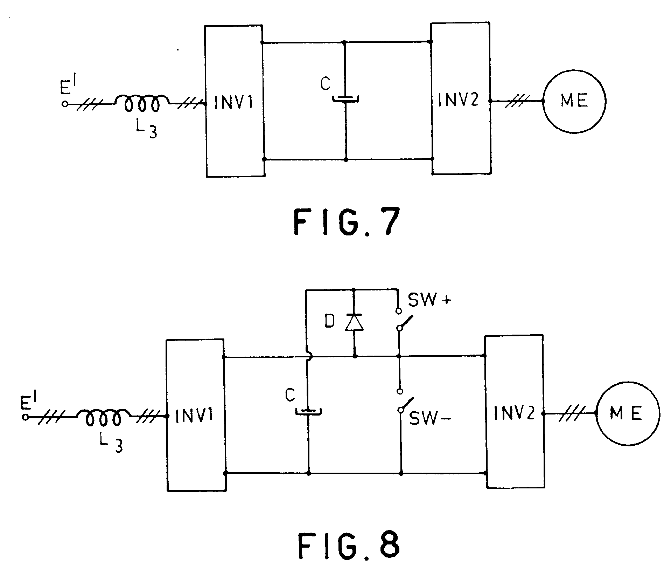

Suivant la technique précédente relative aux convertisseurs de tension, cela est obtenu par deux inverseurs, INV1 vers le réseau E′ et INV2 vers la charge ME, couplés entre eux en courant continu avec l'addition de condensateurs de filtrage et avec une inductance L₃ tournée vers le réseau d'alimentation E′, comme il est montré par le schéma de la figure 7. Dans ce convertisseur, toutes les valves incluses dans les inverseurs montrent les problèmes exposés dans le préambule.

En appliquant l'invention il est possible, par un seul système de composants constituant une structure d'assistence à la commutation, assister les deux inverseurs, de sorte à permettre de les dimensionner pour la conduction seulement. Le schéma relatif est montré par la figure 8. Le comportement du système de composants, caractéristique de l'invention, demeure comme exposé à propos des modes de réalisation précédents, et comme on le comprend ses effets s'étendent, outre qu'à l'inverseur INV2 vers la charge ME, aussi à l'inverseur INV1 vers le réseau E′. Dans un tel cas, donc, l'avantage assûré par l'adoption de l'invention est multiplié, si un système EA, DA, SWA de réduction des pertes de commutation, comme montré par la figure 6, est ajouté.

On doit préciser que le fonctionnement caractéristique suivant l'invention des éléments interrupteurs contrôlés SW+ et SW-, destiné à assister la commutation des valves incluses dans les inverseurs, peut être commandé sur demande, à savoir en intervenant chaque fois que les circuits de contrôle CC commandent une opération de commutation sur les circuits inverseurs, ou bien ce fonctionnement peut être commandé en cadence avec une fréquence suffisamment élevée, et dans ce cas toute commutation désirée est maintenue en attente jusqu'au moment où une condition favorable pour la commutation se présente.

On voit donc comme l'application de l'invention permet de dimensionner un convertisseur de puissance d'une façon considérablement plus simple et économique, sans préjuger ou même en améliorant les conditions de fiabilité et de protégeabilite du convertisseur.

Bien qu'on a décrit des modes spécifiques de réalisation de l'invention, on doit entendre que l'invention n'est pas limitée a ces modes. Tout accessoire complémentaire, qu'on n'a pas décrit parce qu'il n'était pas nécessaire pour la compréhension de l'invention, peut être ajouté, les caractéristiques des différents schémas montrés peuvent être combinées entre elles, l'invention telle que définie à la revendication 1 peut être adoptée en des applications similaires de celles indiquées ou ayant des exigences similaires, et des modifications ainsi que tout remplacement de moyens techniques équivalents peuvent être portées à ce qu'on a décrit et illustré.

## Revendications

1. Convertisseur de puissance d'énergie électrique, comprenant une source (E; INV1) de tension électrique unidirectionnelle et un circuit inverseur de tension (INV; INV2) constitué par des composants dont on peut commander le commencement et la fin de l'intervalle de conduction, ledit inverseur étant disposé pour convertir ladite tension électrique unidirectionnelle en une tension électrique alternative, éventuellement polyphasée, destinée à alimenter une charge inductive, telle qu'un moteur électrique (ME), ledit convertisseur étant tel qu'entre la source (E; INV1) d'énergie électrique unidirectionnelle et le circuit inverseur de tension (INV; INV2) est inséré en dérivation un système de composants (C,D,SW+,SW-) comprenant en particulier un premier (SW+) et un second (SW-) élément interrupteur, disposé pour commander, d'une façon active et non conditionnée dans le temps, la tension d'alimentation du circuit inverseur de tension (INV; INV2), de façon, d'un côté, de limiter la valeur maximum de la tension appliquée au circuit inverseur, et de l'autre côté d'assister la commutation en annulant temporairement la tension d' alimentation appliquée au circuit inverseur, au moins dans les intervalles de temps dans lesquels des commutations doivent être effectuées dans le circuit inverseur; ledit convertisseur étant caractérisé en ce que ledit système de composants (C,D,SW+,SW-) est complété par une source (EA) d'une tension réduite par rapport à la tension d'alimentation du circuit inverseur et ayant le même sens de cette dernière, cette source (EA) formant, en série avec une diode (DA) et un interrupteur (SWA), un groupe, inséré en parallèle audit second élément interrupteur (SW-), capable de forcer, lors de la fermeture de l'interrupteur (SWA), qui a lieu avant la fermeture dudit premier élément interrupteur (SW+), l'application d'une tension positive réduite (EA) provoquant la restauration de la polarisation directe dudit second élément interrupteur (SW-) ainsi que de tous les composants des jambes actives de l'inverseur (INV).

2. Convertisseur suivant la revendication 1, caractérisé en ce que ledit système de composants comprend un condensateur (C) connecté, à travers une diode (D), en dérivation à la source (E; INVl) de tension unidirectionnelle, un premier élément interrupteur contrôlé (SW+) inséré en dérivation à ladite diode (D), et un second élément interrupteur contrôlé (SW-) inséré en un circuit dérivé à l'entrée du circuit inverseur (INV; INV2).

3. Convertisseur suivant la revendication 1 ou 2, dans lequel ladite source de tension unidirectionnelle est constituée par un circuit inverseur (INV1) alimenté par un courant alternatif éventuellement polyphasé, ayant une inductance (L₃) tournée vers le réseau d'alimentation (E′), caractérisé en ce que ledit circuit inverseur (INVl) tourné vers le réseau d'alimentation (E′) est assisté aux fins de la commutation par le même système de composants (C,D,SW+,SW-,EA,DA,SWA) disposé pour assister dans la commutation le circuit inverseur (INV2) tourné vers la charge (ME).

4. Convertisseur suivant la revendication 3, caractérisé en ce qu'il est dépourvu d'éléments inductifs disposés entre ledit circuit inverseur (INV1) tourné vers le réseau (E′) et ledit circuit inverseur (INV2) tourné vers la charge (ME).

5. Convertisseur suivant une quelconque des revendications précédentes, caractérisé en ce que lesdits éléments interrupteurs contrôlés (SW+,SW-) sont commandés de sorte à intervenir sur demande chaque fois que les circuits de contrôle (CC) des inverseurs (INV) commandent au moins une commutation.

6. Convertisseur suivant une quelconque des revendications 1 à 4, caractérisé en ce que lesdits éléments interrupteurs contrôlés (SW+,SW-) sont commandés en cadence, et que les commutations demandées par les circuits de contrôle (CC) des inverseurs (INV) sont maintenues en attente jusqu'à ce que des conditions favorables pour la commutation se présentent.

## Patentansprüche

1. Elektrischer Stromleistungswandler mit einer Quelle (E; INV1) elektrischer Spannung gleichbleibender Richtung und einem Spannungswendekreis (INV; INV2), der aus Komponenten besteht, bei denen sowohl der Anfang als auch das Ende des leitenden Zeitabschnittes gesteuert werden können, wobei der Wendekreis dazu angeordnet ist, die elektrische Spannung gleichbleibender Richtung in eine eventuell mehrphasige elektrische Wechselspannung umzuformen, die einer induktiven Last, wie etwa einem elektrischen Motor (ME) zugeführt werden soll, wobei der Wandler so aufgebaut ist, dass zwischen der Quelle (E; INV1) elektrischer Spannung gleichbleibender Richtung und dem Spannungswendekreis (INV; INV2) ein Komponentensystem (C,D,SW+,SW-) im Nebenschluss geschaltet ist, das insbesondere ein erstes Schaltelement (SW+) und ein zweites Schaltelement (SW-) umfasst, und wobei dieses System dazu angeordnet ist, die dem Spannungswendekreis (INV,INV2) zugeführte Spannung aktiv und nicht zeitlich bedingt zu kontrollieren, und zwar so, dass einerseits der Höchstwert der am Wendekreis angelegten Spannung begrenzt wird und anderseits die Umschaltung unterstützt und gleichzeitig die am Wendekreis angelegte Spannung wenigstens in den Zeitabschnitten aufgehoben wird, in denen im Wendekreis Umschaltungen vorgenommen werden müssen, dadurch gekennzeichnet, dass das Komponentensystem (C,D,SW+, SW-) durch eine Quelle (EA) ergänzt ist, die eine Spannung liefert, die niedriger als die dem Wendekreis zugeführte Spannung ist und die gleiche Richtung derselben hat, wobei diese Quelle (EA) in Reihenschaltung mit einer Diode (DA) und einem Schalter (SWA) eine mit dem zweiten Schaltelement (SW-) parallelgeschaltete Gruppe bildet, die in der Lage ist, im Augenblick der Schliessung des Schalters (SWA), die vor der Schliessung des ersten Schaltelements (SW+) erfolgt, das Anlegen einer niedrigeren Positivspannung (EA) zu erzwingen und dabei die Wiederherstellung der direkten Polarisation sowohl des zweiten Schaltelements (SW-) als auch aller Komponenten der aktiven Schenkel des Wendekreises (INV) herbeizuführen.

2. Wandler nach Anspruch 1, dadurch gekennzeichnet, dass das Komponentensystem einen über eine Diode (D) mit der Quelle (E; INV1) der Spannung gleichbleibender Richtung im Nebenschluss geschalteten Kondensator (C), ein erstes, mit der Diode (D) im Nebenschluss geschaltetes, kontrolliertes Schaltelement (SW+) und ein zweites, in einem Zweigkreis am Eingang des Wendekreises (INV1;INV2) eingeschaltetes, kontrolliertes Schaltelement (SW-) umfasst.

3. Wandler nach Anspruch 1 oder 2, bei dem die Quelle der Spannung gleichbleibender Richtung aus einem Wendekreis (INV1) besteht, dem ein eventuell mehrphasiger Wechselstrom zugeführt wird und der eine auf den Netzanschluss (E′) gerichtete Induktivität (L3) aufweist, dadurch gekennzeichnet, dass der auf den Netzanschluss (E′) gerichtete Wendekreis (INV1) zur Umschaltung durch dasselbe Komponentensystem (C,D,SW+,SW-,EA,DA,SWA) unterstützt ist, das zur Unterstützung der Umschaltung des auf die Last (ME) gerichteten Wendekreises (INV2) angeordnet ist.

4. Wandler nach Anspruch 3, dadurch gekennzeichnet, dass in demselben, zwischen dem auf den Netzanschluss (E′) gerichteten Wendekreis (INV1) und dem auf die Last (ME) gerichteten Wendekreis (INV2), keine induktiven Elemente angeordnet sind.

5. Wandler nach irgendeinem der vorhergehenden Ansprüche, dadurch gekennzeichnet, dass die kontrollierten Schaltelemente (SW+,SW-) so angesteuert werden, dass sie auf Verlangen jedes Mal ansprechen, bei dem die Kontrollschaltkreise (CC) der Wendekreise wenigstens eine Umschaltung angesteuert haben.

6. Wandler nach irgendeinem der vorhergehenden Ansprüche, dadurch gekennzeichnet, dass die kontrollierten Schaltelemente (SW+,SW-) taktweise angesteuert werden und dass man auf die durch die Kontrollschaltkreise (CC) der Wenderkreise (INV) verlangten Umschaltungen so lange wartet, bis sich zur Umschaltung günstige Bedingungen einstellen.

## Claims

1. An electric energy power converter comprising a unidirectional voltage source (E; INV1) and a voltage inverter circuit (INV;INV2) formed by components whose start and end of the conduction period may be controlled, said inverter being arranged to convert said unidirectional voltage into an alternative voltage, possibly polyphase, intended to supply an inductive load, such as an electric motor (ME), said converter being such that between the unidirectional electric energy source and the voltage inverter circuit (INV; INV2) there is inserted in parallel a system of components (C,D,SW+,SW-) comprising in particular a first switch element (SW+) and a second switch element (SW-), intended for controlling, in an active and time unconditional manner, the supply voltage of the voltage inverter circuit (INV; INV2), in the sense, on one hand, of limiting the maximum value of the voltage applied to the inverter circuit, and on the other hand of assisting the commutation by temporarily zeroing the supply voltage applied to the inverter circuit, at least during the time periods wherein some commutations should be effected within the inverter circuit; said converter being characterized in that said system of components (C,D,SW+,SW-) is completed by a source (EA) of a voltage, reduced with respect to the supply voltage of the inverter circuit and having the same direction of this latter, this source (EA) forming, in series with a diode (DA) and a switch (SWA), a group inserted in parallel to said second switch element (SW-), suitable for forcing, at the time of the closure of switch (SWA), which takes place before the closure of said first switch element (SW+), the application of a reduced positive voltage (EA), thus causing the restoration of the direct polarisation of said second switch element (SW-) as well as of all components of the active legs of the inverter (INV).

2. A converter as set forth in Claim 1, characterized in that said system of components comprises a capacitor (C) connected, through a diode (D), in parallel to the unidirectional electric voltage source (E; INV1), a first controlled switch element (SW+) inserted in parallel to said diode (D), and a second controlled switch element (SW-) inserted in a parallel circuit at the input of the inverter circuit (INV1; INV2).

3. A converter as set forth in Claim 1 or 2, wherein said source of unidirectional voltage is formed by an inverter circuit (INV1) fed by an alternate current, possibly polyphase, and has an inductor (L₃) directed towards the supply network (E′), characterized in that said inverter circuit (INV1) directed towards the supply network (E′) is assisted, in its commutation, by the same system of components (C,D,SW+,SW-,EA,DA, SWA) intended to assist the commutation of the inverter circuit (INV2) directed towards the load (ME).

4. A converter as set forth in Claim 3, characterized in that it is free from inductive elements inserted between said inverter circuit (INV1) directed towards the network (E′) and said inverter circuit (INV2) directed towards the load (ME).

5. A converter as set forth in any of the foregoing Claims, characterized in that said controlled switch elements (SW+,SW-) are driven in order to intervene on request each time the circuits (CC) controlling the inverters (INV) have ordered at least one commutation.

6. A converter as set forth in any of the Claims 1 to 4, characterized in that said controlled switch elements (SW+,SW-) are driven with a controlled clock rate, and that each commutation ordered by the circuits (CC) controlling the inverters (INV) is kept in suspence until the moment in which a condition favorable for the commutation appears.
